# DEMANDE DE BREVET EUROPEEN

(11) **EP 4 776 477 A1**
(43) Date de publication de la demande: **15.07.2026**
(21) Numéro de dépôt: 25151595.3
(22) Date de dépôt: 13.01.2025
(51) Int. Cl.: H02K 1/20, H02K 5/20, H02K 9/197, H02K 5/18, H02K 9/19, H02K 11/33

(54) **MACHINE ÉLECTRIQUE À REFROIDISSEMENT OPTIMISÉ**

(71) Demandeur: Compact Power Motion GmbH, 85774 Unterföhring (DE)
(72) Inventeur: Gadefait, Paul, 85774 Unterföhring (DE); Klein, Julien, 85774 Unterföhring (DE)
(74) Mandataire: IP Trust

(57) **Abrégé**

La présente invention concerne une machine électrique comprenant deux carters complémentaires (100, 200) présentant chacun une paroi tubulaire
- le premier carter (100) entourant un rotor (30) entouré par un stator (20) présentant N dents (25) bobinées s'étendant radialement par rapport à une culasse (21) cylindrique en contact thermique avec ladite paroi dudit premier carter (100) :
- le premier et/ou le deuxième carter (100, 200) présentant deux raccords fluidiques décalés angulairement,
- les parois tubulaires desdits carters (100, 200) définissant entre-elles une chambre de circulation tubulaire (300) de fluide lorsque lesdits carters complémentaires (100, 200) sont assemblés. Cette chambre de circulation tubulaire (300) présente une succession de L trames angulaires (310) dont la section de passage varie entre une zone angulaire maximale aux deux extrémités et une zone angulaire minimale (340) au niveau de la dent bobinée correspondante (25).

## Description

### DOMAINE DE L'INVENTION

La présente invention concerne le domaine du refroidissement pour machines électriques à boîtier fermé et refroidissement en circuit fermé utilisant un fluide de refroidissement liquide. Elle concerne plus particulièrement une chambre de refroidissement pour une machine électrique tournante, ainsi qu'une machine électrique tournante comprenant une telle chambre de refroidissement.

Ce type de machine électrique tournante peut être refroidi par convexion au moyen de ventilateurs montés sur le rotor et permettant de faire circuler un flux d'air notamment à travers le stator. Ce type de refroidissement est particulièrement efficace lorsque la machine fonctionne à grande vitesse. En effet, plus le rotor tourne vite et plus le ventilateur peut brasser de l'air. Cependant, ce type de refroidissement peut ne pas être suffisant lorsque la machine fonctionne à faible vitesse de rotation. En outre, le refroidissement par air est limité par la taille du ventilateur qui doit tenir dans un encombrement restreint.

On a également proposé dans l'art antérieur des solutions de refroidissement par circulation d'un liquide caloporteur, typiquement de l'eau ou de l'huile, dans une poche tubulaire entourant le stator.

### Etat de la technique

On connaît dans l'état de la technique le brevet FR3106942B1 décrivant une machine électrique tournante, comprenant :
- un rotor mobile en rotation autour d'un axe,
- un stator disposé autour du rotor, et
- une chambre de refroidissement disposée radialement autour du stator et délimitée entre une paroi radialement intérieure et une paroi radialement extérieure, du liquide circulant dans cette chambre entre une entrée en liquide dans la chambre et une sortie en liquide dans la chambre, cette entrée en liquide et cette sortie en liquide étant angulairement décalées par rapport à l'axe de rotation du rotor, l'une au moins de la paroi radialement intérieure et de la paroi radialement extérieure portant au moins un relief faisant radialement saillie dans la chambre de refroidissement en direction de l'autre de la paroi radialement intérieure et de la paroi radialement extérieure, sans atteindre cette autre paroi. La saillie radiale définie par le muret correspond à une réduction locale de la dimension radiale de la chambre de refroidissement. Le relief porté par une paroi ne s'étend pas dans la chambre jusqu'à l'autre paroi, de sorte que ce relief n'établit pas d'étanchéité. Il n'est ainsi pas nécessaire de s'assurer que les chaînes de cotes des pièces réalisant cette chambre seront à même d'obtenir cette étanchéité.

Le brevet FR3083021A1 décrit un autre exemple de moteur électrique comprenant :
- un rotor comprenant un axe de rotation (X), un stator comportant un paquet de tôles comprenant des tôles empilées axialement autour du rotor, le paquet de tôles comprenant :
   ∘ i. une couronne comprenant une périphérie externe,
   ∘ ii. des dents statoriques s'étendant radialement de la couronne vers l'axe de rotation (X) et axialement le long de l'axe de rotation (X).

Cette machine électrique de l'art antérieur comprend en outre un circuit de refroidissement comprenant un premier conduit de refroidissement (A) traversant une des dents statoriques et la couronne, le premier conduit de refroidissement (A) comprend d'une part un orifice d'entrée débouchant sur la périphérie externe de la couronne et d'autre part un orifice de sortie débouchant sur une partie d'extrémité de la dent statorique pour que du liquide de refroidissement entrant dans l'orifice d'entrée sorte par l'orifice de sortie à l'intérieur de la machine électrique.

### Inconvénients de l'art antérieur

Les solutions de l'art antérieur ne sont pas totalement satisfaisantes car les reliefs formés à la surface tubulaires des parois tubulaires entre lesquelles circule le fluide de refroidissement occasionnent des pertes de charges importante augmentant la consommation électrique de la pompe de circulation, et par ailleurs peuvent perturber l'écoulement du fluide et créer des points chauds dans certaines zones.

### Solution apportée par l'invention

Afin de répondre à ces inconvénients, l'invention concerne selon son acception la plus générale un moteur présentant les caractéristiques techniques énoncées dans la revendication principale.

Le moteur selon l'invention présente notamment les caractéristiques suivantes :

Il comprend deux carters complémentaires présentant chacun une paroi tubulaire
- le premier carter entourant un rotor entouré par un stator présentant N dents bobinées s'étendant radialement par rapport à une culasse cylindrique en contact thermique avec ladite paroi dudit premier carter,
- le premier et/ou le deuxième carter présentant deux raccords fluidiques décalés angulairement,
- les parois tubulaires desdits carters définissant entre-elles une chambre de circulation tubulaire de fluide lorsque lesdits carters complémentaires sont assemblés.

La chambre de circulation tubulaire présente une succession de L trames angulaires dont la section de passage varie entre une zone angulaire maximale aux deux extrémités et une zone angulaire minimale au niveau de la dent bobinée correspondante.

Selon des variantes de la machine selon l'invention :

la configuration de ladite chambre de circulation tubulaire du fluide de refroidissement présente principalement, pour chaque trame angulaire englobant angulairement une dent et un secteur inter-dent :
▪ Une première zone angulaire où la surface intérieure de la paroi annulaire du carter extérieur présente une protubérance d'épaisseur croissante pour former un secteur angulaire dont la section amont est supérieure à la section moyenne du conduit de circulation, et la section aval inférieure à la section moyenne du conduit de circulation,
▪ Une deuxième zone angulaire, en aval de ladite première zone angulaire, où la surface intérieure de la paroi annulaire du carter extérieur présente un pan oblique dont la tangente aval forme avec le plan radial un angle compris entre 30° et 75°,
▪ Une troisième zone angulaire, en aval de ladite deuxième zone angulaire, de section inférieure à la section moyenne du conduit de circulation,
▪ Une quatrième zone angulaire de section croissante pour atteindre la section de la section amont de ladite première zone angulaire.

L'épaisseur de la paroi annulaire du carter intérieur est sensiblement constante avec des variations inférieures à 20%.

La zone de section minimale s'étend sur un angle compris entre Mx360/N, M étant compris 5 et 15%.

Le début de cette zone de section minimale débute après l'arête amont de la dent correspondante.

La chambre circulation est prolongé par une zone de refroidissement additionnelle vers un volume creux situé en vis-à-vis de la carte électronique.

Le nombre N de dents bobinées et égal au nombre L de trames angulaires.

Le stator présente N dents bobinées, et en outre des dents non bobinées, le nombre L de trames angulaires étant égale au nombre total de dents bobinées ou non.

Les trames angulaires situées au niveau des embouchures d'entrée et de sortie du fluide, présentent en coupe transversale, une géométrie différente des autres trames (310).

### Description détaillée d'un exemple non limitatif de réalisation

La présente invention sera mieux comprise à la lecture de la description qui suit, concernant un exemple non limitatif de réalisation illustré par les dessins annexés où :
[FIG. 1] la figure 1 représente une vue de dessus d'un exemple de réalisation d'un moteur selon l'invention,
[FIG. 2] la figure 2 représente une vue en coupe longitudinale d'un exemple de réalisation d'un moteur selon l'invention,
[FIG. 3] la figure 3 représente une vue en perspective du carter intérieur d'un exemple de réalisation d'un moteur selon l'invention
[FIG. 4] la figure 4 représente une vue en perspective du carter extérieur d'un exemple de réalisation d'un moteur selon l'invention,
[FIG. 5] la figure 5 représente une section du moteur permettant de visualiser la chambre de circulation du fluide d'un exemple de réalisation d'un moteur selon l'invention,
[FIG. 6] la figure 6 représente une vue en perspective éclatée d'un exemple de réalisation d'un moteur selon l'invention,
[FIG. 7] la figure 7 représente une vue schématique « dépliée » de la chambre de circulation du fluide.

### Principe général de l'invention

Le principe général de l'invention concerne l'amélioration du refroidissement convectif par circulation d'un liquide dans une chambre de circulation tubulaire (300) formée entre deux parois annulaires (160, 260) coaxiales des carters (100, 200). Le carter intérieur

(100) contient le rotor (30) entouré par le stator (20). Les dents (25) bobinées du stator s'étendent radialement par rapport à une culasse cylindrique et sont en contact thermique avec la paroi de ce carter intérieur.

La chambre de circulation tubulaire (300) présente une discontinuité suivant sa section planaire permettant d'empêcher la circulation du fluide. Deux embouchures (210, 220) sont situées de part et d'autre de cette discontinuité et sont prolongées par des raccords fluidiques pour permettre l'entrée et la sortie du fluide de la chambre de circulation tubulaire (300). La discontinuité (305) permet d'imposer un sens de circulation du fluide et de lui faire parcourir l'intégralité de la circonférence du moteur avant de quitter la chambre de circulation tubulaire (300).

Les deux raccords fluidiques (380, 390), sont préférentiellement agencés sur l'embase (105) du carter inférieur (100) et orientés axialement pour simplifier la connexion des raccords avec le système fluidique, mais pourraient également être agencés sur l'un ou l'autre des carters et orientés de manière radiale, tangentielle, ou selon un angle particulier par rapport à l'orientation radiale.

L'amélioration du transfert thermique entre le fluide circulant et les carters (100, 200) est obtenu grâce à une succession de trames angulaires (310) de sections différentes, d'un nombre identique à celui du nombre de dents. Ces trames angulaires créent des variations de la section de circulation et des déflexions de la direction de circulation. La section de passage varie entre une valeur maximale aux deux extrémités de ces trames angulaires, et une valeur minimale au niveau de la dent bobinée correspondante. On détermine une section moyenne de ce conduit de circulation pour catégoriser les zones de section réduite et les zones de section élargie.

les effets recherchés sont :
▪ casser l'établissement d'un régime laminaire pour améliorer l'interaction convective entre le fluide de refroidissement et la paroi du carter intérieur (100), qui est en contact thermique avec la culasse du stator (20) et améliorer la dissipation thermique de la paroi dudit carter intérieur (100) en évacuant les calories par le fluide,
▪ diriger l'écoulement du fluide de refroidissement en lui imposant une composante radiale en direction la dent (25) dans la zone angulaire de rétrécissement où le fluide est accéléré.

L'enjeu est de créer des singularités où le coefficient de dissipation est maximisé et de positionner ces singularités au niveau des dents (25). Ceci doit être fait tout en maintenant des pertes de charges acceptables.

La configuration du conduit de circulation du fluide de refroidissement présente principalement, pour chaque section angulaire comprenant une dent et un inter-dent :
▪ Une zone angulaire amont (320), selon le sens de circulation nominal (500) du fluide de refroidissement, dont la section d'entrée est maximale, par rapport à la section moyenne du conduit de circulation, et où la surface intérieure du carter extérieur (200) présente une protubérance d'épaisseur radiale croissante pour restreindre la section du conduit de circulation, afin d'accélérer localement la circulation du fluide et d'améliorer le transfert thermique convectif,
▪ Cette zone angulaire amont se prolongeant par une zone où la protubérance formée à la surface intérieure du carter extérieure se rapproche d'une orientation dans un plan radial afin de créer une zone de turbulence préférentiellement en amont du centre de la dent bobinée et d'orienter le flux du liquide de refroidissement dans la direction de la paroi extérieure du carter intérieur (100) et ainsi accroître le transfert convectif de la chaleur produite par la dent bobinée correspondante
▪ Cette zone de turbulence est prolongée par une zone angulaire de section minimale par rapport à la section moyenne du conduit de circulation, où le fluide de refroidissement s'écoule plus rapidement pour maximiser la récupération et le transfert des calories
▪ Cette zone d'étranglement se prolongeant par une zone angulaire d'élargissement de la section du conduit, par rapport à la section moyenne du conduit de circulation, afin de présenter, en aval de la trame, une section maximale correspondant à la section d'entrée de la trame suivante et de réduire les pertes de charge.

### Description d'un exemple de moteur selon l'invention

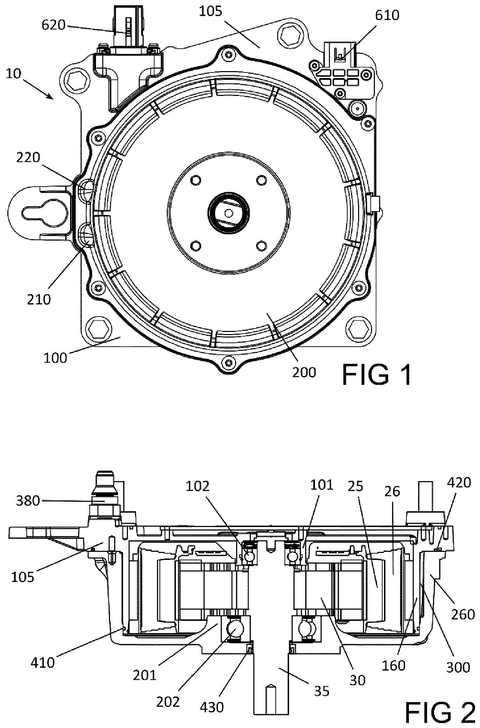

Les figures 1 à 6 illustrent un exemple de réalisation d'un moteur selon l'invention. Le moteur (10) comprend un carter intérieur (100) métallique évasé à une extrémité par une embase (105) sur laquelle est montée de manière étanche un carter extérieur (200) formant une cloche métallique présentant deux embouchures (210, 220) pour la connexion de raccords fluidiques (310, 320) pour l'alimentation par un liquide de refroidissement. Ces deux raccords (310, 320) sont décrits dans les figures susvisées avec une orientation radiale et débouchant dans le carter extérieur (200). Toutefois, l'un ou l'autre, ou les deux raccords (310, 320) peuvent aussi être orientés avec une composante tangentielle, ou encore déboucher axialement dans le flasque transversal du carter intérieur (100).

L'étanchéité de la chambre de circulation tubulaire (300), définie par les parois annulaires (160, 260) des carters (100, 200), est assurée à l'aide de joints (410, 420) insérés pour l'un dans une gorge de la surface intérieure de ladite paroi annulaire (160) et en contact avec la paroi annulaire (260) et pour l'autre dans une gorge située dans l'embase (105) du carter intérieur (100) et en appui sur l'extrémité axiale du carter extérieur (200).

L'embase (105) comporte en outre deux connecteurs électriques (610, 620), à savoir un connecteur de puissance (620) et un connecteur faible puissance (610) pour les signaux de commande numérique.

Le moteur comprend de manière connue un rotor (30) accouplé à un axe (35), et un stator comprenant une couronne de N dents (25) entourées par des bobines (26).

L'embase (105) du carter intérieur (100) est prolongée par une paroi annulaire (160) définissant avec une paroi annulaire (260) du carter extérieur (200) une chambre de circulation tubulaire (300) à l'intérieur de laquelle circule le liquide de refroidissement.

Le rotor (30) présente des aimants périphériques (31) supportés par un moyeu transversal présentant une hauteur axiale inférieure à celle des aimants, de manière à dégager l'espace requis pour le logement des roulements (102, 202). Cette solution permet de réduire la hauteur globale de la machine électrique et de réduire son encombrement axial, grâce à l'insertion des roulements dans l'épaisseur axiale du rotor (30).

La platine (100) présente en outre une zone d'accueil (101) pour le positionnement d'un roulement (102) assurant le guidage de l'axe (35).

Le carter extérieur (200) présente également une zone d'accueil (201) pour le positionnement d'un roulement (202) assurant le guidage de l'axe (35). Un joint (430) assure l'étanchéité de la sortie d'axe.

### Exemple de configuration du carter intérieur (100)

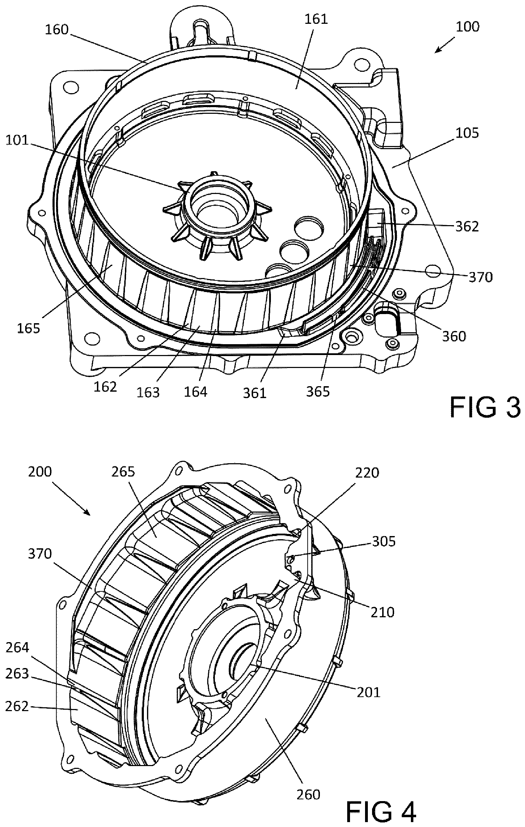

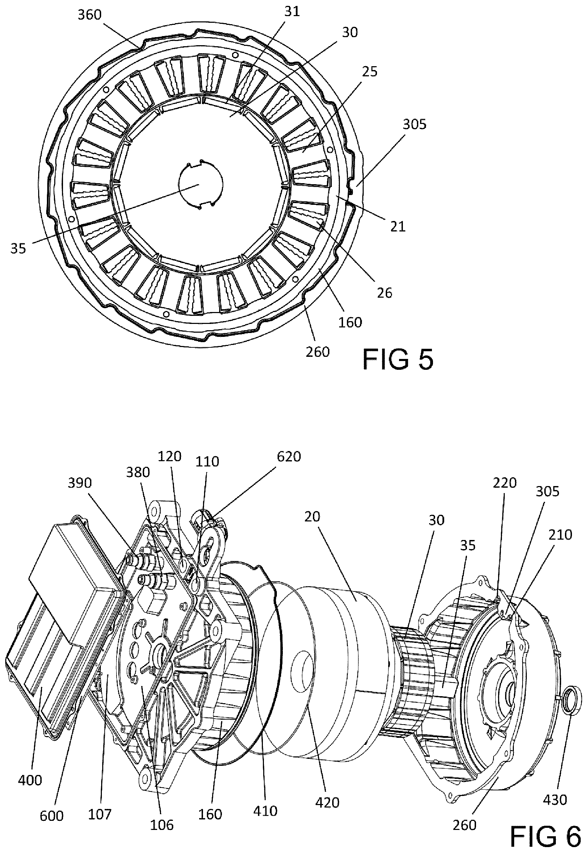

Le carter intérieur (100) présente selon cet exemple de réalisation illustré par les figures 3 et 5 une configuration globalement tubulaire avec, sur la surface intérieure de la paroi annulaire (160), des protubérances (161) assurant le calage angulaire de la culasse statorique tout en fournissant une forme complémentaire pour assurer la transmission des calories entre le stator bobiné et ladite surface intérieure de la paroi annulaire (160) du carter intérieur (100) parcourue par le liquide de refroidissement. Dans l'exemple décrit, le nombre de protubérances (161) correspond au nombre de dents statoriques et ces protubérances (161) sont alignées radialement avec les dents statoriques bobinées.

La surface extérieure de la paroi annulaire (160) du carter intérieur (100) présente des protubérances (165) alignées radialement avec les dents statoriques, et optionnellement avec les protubérances (161), pour former des étranglements locaux de la chambre de circulation tubulaire (300) à l'intérieur de laquelle circule le liquide de refroidissement.

Ces protubérances (165) présentent une étendue angulaire inférieure au pas angulaire des dents statoriques. Elles présentent un pan amont (162) d'émergence croissante (par rapport à une section de référence tubulaire), un pan médian (163) d'émergence sensiblement constante et un pan aval (164) d'émergence décroissante.

L'épaisseur de la paroi annulaire (160) du carter intérieur (100) est sensiblement constante sur l'ensemble de la périphérie, et à cet effet la surface intérieure de la paroi annulaire (160) présente des renfoncements angulaires complémentaires des pans (162, 163, 164).

Dans l'exemple décrit, les protubérances (165) présentent, de face, une forme ogivale, c'est-à-dire que l'épaisseur de la paroi annulaire (160) décroit, entre sa partie reliée à l'embase (105) et son extrémité axiale supérieure, de sorte à pouvoir générer le carter intérieur (100) par procédé de moulage.

L'embase (105) du carter intérieur (100) présente également dans l'exemple décrit un canal semi-circulaire (351) communiquant avec la chambre de circulation tubulaire (300) pour assurer le refroidissement du circuit électronique fixé dans un logement (106) prévu sur la face extérieure de ladite embase (105).

### Exemple de configuration du carter extérieur

La figure 4 illustre un exemple de réalisation du carter extérieur (200) dans lequel le fluide circule dans le sens horaire. Il présente une paroi annulaire (261) munie sur sa surface intérieure des protubérances (265), dont le nombre correspond de préférence au nombre de dents statoriques.

La forme de ces protubérances (265) présente un pan d'attaque (262) présentant une épaisseur croissante, avec une pente brisée avec deux surfaces de pentes différentes, un pan médian (263) d'épaisseur sensiblement constante et un pan d'échappement (264) de section décroissante.

Plus visibles dans la vue éclatée de la figure 6, les embouchures (210, 220) de la paroi annulaire (261) coopèrent avec les conduits (110, 120) auxquels sont reliés les connecteurs fluidique (380, 390) pour assurer l'arrivée du fluide et son évacuation de la chambre de circulation tubulaire (300).

### Détail de la configuration du conduit de circulation

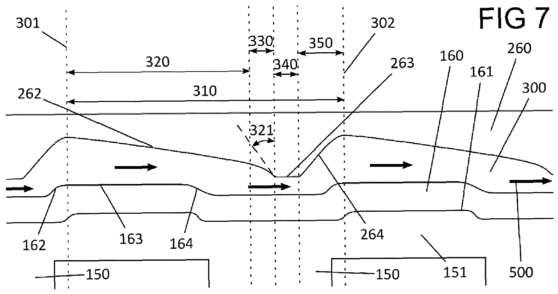

La figure 7 illustre un exemple de configuration de la chambre de circulation tubulaire (300), et plus précisément une trame angulaire (310) qui est répétée L fois, L correspondant préférentiellement au nombre N de dents bobinées de la machine. De manière à en simplifier l'illustration, la chambre de circulation tubulaire (300) est représentée de manière « déroulée », c'est-à-dire comme si le rayon de la tubulure était infini.

La trame angulaire (310) correspond à un motif complet, qui se répète L fois. Elle s'étend entre la ligne pointillée amont (301) et la ligne pointillée aval (302), « amont » et « aval » se référant dans l'intégralité du document en sens de circulation du fluide de refroidissement.

La trame angulaire (310) s'étend sur 360/L°, L désignant préférentiellement le nombre de dents statoriques (25) bobinées, mais la machine peut également présenter des dents non bobinées pour lesquelles il est optionnel de faire correspondre une trame angulaire.

Cette trame angulaire (310) présente une première zone angulaire (320) de section principalement décroissante délimitée :
- par le pan médian (163) d'émergence constante du carter intérieur (100) puis par le pan (164) du carter intérieur (100), d'une part, et
- par la première partie du pan d'attaque (262), d'épaisseur lentement croissante, de la protubérance (265) du carter extérieur (200) d'autre part.

Cette zone angulaire (320) a pour fonction d'accélérer progressivement le fluide de refroidissement en amont de la dent (25) à refroidir, tout en limitant les pertes de charge par une décroissance modérée.

Cette première zone angulaire (320) est prolongée, dans le sens d'écoulement du fluide de refroidissement, par une seconde zone angulaire (330), où la section diminue plus rapidement, de sorte à créer des turbulences dans le liquide de refroidissement, en amont de la dent (25) à refroidir, à rediriger le flux avec une composante radiale en direction de la dent (25) et de manière plus générale à créer une singularité s'opposant à un écoulement laminaire du liquide de circulation. Cette fonction est réalisée par la seconde partie du pan d'attaque (262) de la protubérance (265) dont l'épaisseur croit plus rapidement de sorte qu'à l'extrémité avale du pan d'attaque (262), la surface intérieure de la paroi annulaire (260) forme, avec la direction radiale du moteur, un angle (321) situé entre 30 degrés et 75 degrés.

Cette seconde zone angulaire (330) est prolongée, dans le sens d'écoulement du fluide de refroidissement, par une troisième zone angulaire (340) de section minimale, où le liquide de refroidissement circule localement à sa plus grande vitesse de façon à maximiser le transfert thermique des calories produites par la dent (25) située dans ce secteur angulaire.

Cette troisième zone angulaire (340) est prolongée, dans le sens d'écoulement du fluide de refroidissement, par une quatrième zone angulaire (350) d'expansion où la section augmente à nouveau pour ralentir le fluide et déboucher dans l'entrée de la trame angulaire suivante sans pertes de charge excessives.

L'invention porte essentiellement sur la configuration de ce conduit de circulation, présentant une succession de N trames angulaires (310) présentant les quatre zones angulaires (320, 330, 340 et 350) susvisées, dont les variations de section peuvent résulter de protubérances formées indifféremment sur le carter extérieur (200) ou sur la carter intérieur (100), ou réparties entre les deux carters (100, 200).

Néanmoins, dans les modes de réalisation préférés, les protubérances les plus marquées sont formées sur le carter extérieur (200), le carter intérieur (100) pouvant éventuellement être totalement tubulaire, sans excroissances radiales. Le fait que les protubérances soient formées principalement sur le carter extérieur (200) favorise la déflexion du flux de liquide de refroidissement en direction des dents (25) à refroidir.

Comme visible sur la figure 5, il est prévu que les trames angulaires (310) situées au niveau des embouchures (210, 220) d'entrée et de sortie du fluide, présente une géométrie différente. Ces zones sont des singularités pour lesquelles l'écoulement est naturellement turbulent, ce qui permet de garder une bonne aptitude du fluide à évacuer les calories.

### Refroidissement secondaire du circuit électronique

Selon une variante, le circuit de refroidissement présente une dérivation présentant la forme d'une cavité semi-annulaire débouchant dans une zone de refroidissement additionnelle (360) délimitée par l'embase (105) du carter intérieur (100) sur laquelle est fixée le circuit électronique (600) et notamment les composants de puissance, par exemple les transistors Mosfet. Le circuit électronique (600) est plus particulièrement fixé dans un logement (106) de l'embase (105) et les composants de puissance dudit circuit sont judicieusement disposés en vis-à-vis de la paroi (107) définissant le fond de la zone de refroidissement additionnelle (360) de manière à maximiser les échanges thermiques entre le fluide réfrigérant et ces composants.

Cette zone de refroidissement additionnelle (360) du circuit électronique (600) communique fluidiquement avec le circuit de refroidissement principal précédemment décrit et présente des ailettes augmentant la surface de convection avec le liquide fluidique.

La zone angulaire de dérivation (370) présente dans la trame angulaire correspondante une section diminuée de la cavité définie par les parois annulaires (161, 261), pour compenser partiellement l'augmentation de la section de la chambre de circulation tubulaire (300) résultant de l'ajout de la zone de refroidissement additionnelle (360) sur cette zone angulaire de dérivation (370).

L'entrée et la sortie de cette zone de refroidissement additionnelle (360) présente un biseau (361, 362) pour favoriser l'introduction et la sortie du fluide de refroidissement sans formation de poche perdue.

Avantageusement, cette dérivation peut être située au voisinage des raccords d'entrée et de sortie (380, 390) pour profiter de l'écoulement turbulant propice à l'amélioration de la dissipation thermique.

De manière non limitative, une pâte thermique peut-être disposée entre les composants de puissance et la paroi (107) définissant le fond de la zone de refroidissement additionnelle (360).

## Revendications

1. - Machine électrique comprenant deux carters complémentaires (100, 200) présentant chacun une paroi tubulaire
- le premier carter (100) entourant un rotor (30) entouré par un stator (20) présentant N dents (25) bobinées s'étendant radialement par rapport à une culasse (21) cylindrique en contact thermique avec ladite paroi dudit premier carter (100) :
- le premier et/ou le deuxième carter (100, 200) présentant deux raccords fluidiques décalés angulairement,
- les parois tubulaires desdits carters (100, 200) définissant entre-elles une chambre de circulation tubulaire (300) de fluide lorsque lesdits carters complémentaires (100, 200) sont assemblés,
**caractérisé en ce que**
ladite chambre de circulation tubulaire (300) présente une succession de L trames angulaires (310) dont la section de passage varie entre une zone angulaire maximale aux deux extrémités et une zone angulaire minimale (340) au niveau de la dent bobinée correspondante (25).

2. - Machine électrique selon la revendication 1 **caractérisée en ce que** la configuration de ladite chambre de circulation tubulaire (300) du fluide de refroidissement présente principalement, pour chaque trame angulaire (310) englobant angulairement une dent (150) et un secteur inter-dent :
▪ Une première zone angulaire (320) où la surface intérieure de la paroi annulaire (261) du carter extérieur (200) présente une protubérance (265) d'épaisseur croissante pour former un secteur angulaire dont la section amont est supérieure à la section moyenne du conduit de circulation, et la section aval inférieure à la section moyenne du conduit de circulation,
▪ Une deuxième zone angulaire (330), en aval de ladite première zone angulaire (320), où la surface intérieure de la paroi annulaire (261) du carter extérieur (200) présente un pan oblique dont la tangente aval forme avec le plan radial un angle compris entre 30° et 75°,
▪ Une troisième zone angulaire (340), en aval de ladite deuxième zone angulaire (330), de section inférieure à la section moyenne du conduit de circulation,
▪ Une quatrième zone angulaire (350) de section croissante pour atteindre la section de la section amont de ladite première zone angulaire (320).

3. - Machine électrique selon la revendication 1 **caractérisée en ce que** l'épaisseur de la paroi annulaire (160) du carter intérieur (100) est sensiblement constante avec des variations inférieures à 20%.

4. - Machine électrique selon la revendication 1 **caractérisée en ce que** ladite zone de section minimale (330) s'étend sur un angle compris entre Mx360/N, M étant compris 5 et 15%.

5. - Machine électrique selon la revendication 1 **caractérisée en ce que** le début de ladite zone de section minimale (340) débute après l'arête amont de la dent correspondante.

6. - Machine électrique selon la revendication 1 **caractérisée en ce que** ladite chambre circulation (150) est prolongé par une zone de refroidissement additionnelle (360) vers un volume creux situé en vis-à-vis de la carte électronique (600).

7. - Machine électrique selon la revendication 1 **caractérisée en ce que** le nombre N de dents (25) bobinées et égal au nombre L de trames angulaires (310).

8. - Machine électrique selon la revendication 1 **caractérisée en ce que** le stator (20), présentant N dents (25) bobinées, présente également des dents non bobinées, le nombre L de trames angulaires (310) étant égale au nombre total de dents bobinées ou non.

9. - Machine électrique selon la revendication 1 **caractérisée en ce que** les trames angulaires (310) situées au niveau des embouchures (210, 220) d'entrée et de sortie du fluide, présentent en coupe transversale, une géométrie différente des autres trames (310).
